# EUROPÄISCHE PATENTSCHRIFT

(11) **EP 2 364 810 B1**
(45) Veröffentlichungstag und Bekanntmachung des Hinweises auf die Patenterteilung: **08.04.2020**
(21) Anmeldenummer: 11157526.2
(22) Anmeldetag: 09.03.2011
(51) Int. Cl.: B23K 26/22, B23K 26/24, B23K 26/10, B23K 101/14

(54) **Schweißeinrichtung und Schweißverfahren**
Welding device and method
Dispositif de soudage et procédé de soudage

(30) Priorität: 10.03.2010 AT 3792010
(43) Veröffentlichungstag der Anmeldung: 14.09.2011
(73) Patentinhaber: DTEC GmbH, 4582 Spital am Pyhrn (AT)
(72) Erfinder: Dietl, Michael, 4582, Spital am Pyhrn (AT)
(74) Vertreter: Wirnsberger, Gernot

(56) Entgegenhaltungen:
- EP-A2- 1 197 287
- WO-A1-2006/067378
- US-A- 4 233 484
- US-A1- 2002 079 295

## Beschreibung

Die Erfindung betrifft eine Schweißeinrichtung zum Anschweißen eines gerade Abschnitte und gekrümmte Abschnitte aufweisenden Rohres an einem horizontal angeordneten Blech, insbesondere eines mäanderförmig verlaufenden Rohres, wobei das Rohr auf dem Blech angeordnet ist, umfassend zumindest eine Lasereinrichtung, mit der ein Laserlichtstrahl in einen Bereich einer Berührungslinie des Rohres und des Bleches führbar ist, um das Rohr zumindest punktweise am Blech anzuschweißen, wobei die Schweißeinrichtung ein Andrückelement umfasst, um das Rohr bei Bewegung der Schweißeinrichtung an das Blech anzudrücken und zu führen.

Des Weiteren betrifft die Erfindung ein Verfahren zum Anschweißen eines gerade Abschnitte und gekrümmte Abschnitte aufweisenden Rohres, insbesondere eines mäanderförmig verlaufenden Rohres, an einem horizontal angeordneten Blech, wobei das Rohr auf dem Blech angeordnet wird und mit einer Schweißeinrichtung das Rohr abgefahren und zumindest punktweise durch Erwärmen angeschweißt wird, wobei ein Andrückelement der Schweißeinrichtung auf dem Rohr auf- und/oder anliegt.

Aus dem Stand der Technik sind Flachabsorber bekannt, die ein Blech und ein Rohr umfassen. Das Blech ist auf einer Vorderseite beschichtet, um einfallende Sonnenstrahlung bestmöglich zu absorbieren. An einer Rückseite des Bleches ist ein metallisches Rohr angeschweißt, in dem ein Wärmeträgermedium geführt wird. Das Rohr ist in der Regel mäanderförmig ausgebildet und zumindest entlang gerader Abschnitte punktweise mit dem Blech verschweißt bzw. an diesem angeschweißt.

Zur Herstellung eines Flachabsorbers mit einem Blech und einem daran angeschweißten Rohr ist es Stand der Technik, ein vorgefertigtes, mäanderförmiges Rohr auf ein Blech aufzulegen und mit einer Schweißeinrichtung bzw. einem Schweißroboter punktweise anzuschweißen. Eine Vorrichtung zum punktweisen Anschweißen eines Rohres an einem Blech bzw. ein entsprechendes Verfahren ist aus der WO 2006/067378 A1 bekannt.

Möglich ist es gemäß dem Stand der Technik auch, ein Rohr von einem Coil kontinuierlich abzuziehen, am Blech mittels geeigneter Hilfsmittel anzuordnen und sodann unter kontinuierlicher Nachführung vom Coil das Rohr am Blech anzuschweißen.

Wenn ein Rohr an einem Blech zum Zwecke der Herstellung eines Flachabsorbers angeschweißt wird, sind möglichst viele Schweißpunkte gewünscht. Die Anzahl von Schweißpunkten ist hinsichtlich einer guten Wärmeübertragung vom Blech zum Rohr und damit zum Wärmeträgermedium äußerst wichtig. Es ist daher wünschenswert, insbesondere auch in gekrümmten Abschnitten mäanderförmiger Rohre am Blech anzuschweißen, um eine möglichst hohe Zahl von Schweißpunkten zu erhalten. Gleichzeitig ist jedoch gefordert, dass ein Herstellungsverfahren hocheffizient sein soll, was immer schwieriger wird, je mehr Schweißpunkte vorgesehen sind.

Gemäß dem Stand der Technik wird zum Führen bzw. Andrücken eines an einem Blech angeordneten oder auf diesem geführten Rohres ein Andrückelement in Form einer Rolle mit einer v-förmigen Nut eingesetzt, die auf einer Schweißeinrichtung drehbar befestigt ist. Die Rolle drückt ein Rohr in dessen geraden Abschnitten auf das Blech, wo das Rohr mithilfe seitlich angeordneter Lasereinrichtungen am Blech angeschweißt wird. Des Weiteren sind vertikale Führungen vorgesehen, die in der Regel aus vertikalen, sich im Betrieb um eine vertikale Drehachse drehenden Rollen bzw. Rundstangen bestehen und in Verfahrrichtung der Schweißeinrichtung vor der Rolle angeordnet sind. Diese vertikalen Führungen dienen einer Positionierung des Rohres, ehe dieses von der Rolle erfasst und angeschweißt wird.

Darüber hinaus sind aus den Dokumenten EP 1 197 287 A2, WO 2006/067378 A1 und US 2002/079295 A1 Schweißeinrichtungen bekannt, welche zum Anschweißen eines gerade Abschnitte und gekrümmte Abschnitte aufweisenden Rohres an einem Blech geeignet sind.

Auch im Dokument US 4,233,484 A ist eine Schweißeinrichtung zum Anschweißen eines Rohres an ein Blech offenbart.

Bei Schweißeinrichtungen gemäß dem Stand der Technik ist nachteilig, dass Schweißpunkte in regelmäßig nicht perfekt gekrümmten Abschnitten eines anzuschweißenden Rohres an einem Blech nicht oder nur mit aufwendigen und langsamen Regelmechanismen anbringbar sind. Dies führt dazu, dass entsprechende Flachabsorber entweder eine ungenügende Wärmeübertragung aufweisen oder äußerst aufwendig herzustellen sind.

Aufgabe der Erfindung ist es, eine Schweißeinrichtung der eingangs genannten Art anzugeben, mit der auf einfache konstruktive Weise eine hochproduktive Herstellung von effizienten Flachabsorbern möglich ist.

Ein weiteres Ziel der Erfindung ist es, ein Verfahren der eingangs genannten Art anzugeben, mit dem in hochproduktiver Weise ein effizienter Flachabsorber herstellbar ist.

Die vorstehend dargelegte Aufgabe wird gelöst, wenn bei einer Schweißeinrichtung der eingangs genannten Art ein erster, entlang des Rohres verfahrbarer Teil und ein damit verbundener zweiter Teil vorgesehen sind, wobei das Andrückelement am zweiten Teil gelagert ist, und zumindest ein Stellelement vorgesehen ist, mit dem der zweite Teil relativ zum ersten Teil während des Schweißprozesses alternativ sowohl in eine fixierte als auch in eine Stellung mit freier horizontaler Verschiebbarkeit wahlweise bringbar ist.

Ein mit der Erfindung erzielter Vorteil ist insbesondere darin zu sehen, dass ein hocheffektiver Flachabsorber schnell und damit hochproduktiv hergestellt werden kann. Durch das vorgesehene Stellelement kann der zweite Teil, an dem das Andrückelement gelagert ist, in geraden Abschnitten fixiert werden. Die geraden Abschnitte können schnell abgefahren und eine entsprechende Anzahl von Schweißpunkten vorzugsweise beidseitig des Rohres angebracht werden. In den gekrümmten Abschnitten kann der zweite Teil mit dem Andrückelement in eine horizontal verschiebbare Stellung gebracht werden, sodass der zweite Teil samt Andrückelement in horizontaler Richtung frei verschiebbar ist. Im Gegensatz zu den geraden Abschnitten führt in diesen Abschnitten nicht das Andrückelement das Rohr, sondern umgekehrt das Rohr den zweiten Teil der Schweißeinrichtung samt Andrückelement. Allfällige Fehlstellungen bzw. Fehlbiegungen des Rohres werden dadurch in gekrümmten Abschnitten nicht behoben, allerdings ist das auch nicht zwingend erforderlich. Vielmehr hat sich gezeigt, dass durch die freie Verschiebbarkeit des zweiten Teils samt Andrückelement in gekrümmten Abschnitten in kurzer Zeit eine hohe Anzahl von Schweißpunkten hoher Güte beidseitig des Rohres erreicht werden kann, sodass nicht nur eine hohe Produktivität gegeben ist, sondern auch ein hocheffizienter Flachabsorber erhalten wird.

Besonders bevorzugt ist vorgesehen, dass der erste Teil vertikal verschiebbar gelagert ist. Dadurch lässt sich ein Druck auf das Rohr während des Anschweißens am Blech einstellen. Besonders bevorzugt ist in diesem Zusammenhang vorgesehen, dass der zweite Teil am ersten Teil befestigt ist und ein Haltemittel vorgesehen ist, das auf den ersten Teil eine gegen eine Schwerkraft des ersten Teils und zweiten Teils wirkende Kraft ausübt, wenn dieser frei vertikal verschiebbar ist. Der erste Teil sowie der zweite Teil können dann an sich frei gelagert sein, werden jedoch mit einer Gegenkraft beaufschlagt, sodass eine definierte Andrückkraft am Rohr gegeben ist. Ist nun das Blech bereichsweise tiefer als eine ideale Schweißebene, so wird automatisch das Rohr durch den frei verschiebbaren ersten Teil und die durch diesen erzeugte Andrückkraft auch nachgedrückt, sodass auch in solchen Bereichen eine optimale Qualität der Schweißpunkte erhalten wird. Umgekehrt trifft dies auch zu, wenn das Blech bereichsweise erhaben ist. Mit anderen Worten: Die quasi federnde Lagerung des ersten Teils und des zweiten Teils samt Andrückelement erlaubt einen Ausgleich vertikaler Abweichungen des Bleches und des Rohres von einer idealen Schweißebene.

Das Haltemittel ist bevorzugt eine Kolben-Zylinder-Einheit, die vorzugsweise mit einem Gas beaufschlagbar ist.

Bewährt hat es sich, dass zwei Stellelemente vorgesehen sind, die mit Vorteil ebenfalls Kolben-Zylinder-Einheiten sind und beispielsweise mit Druckluft beaufschlagbar sind.

Um beidseitig eines Rohres Schweißpunkte anbringen zu können, sind am zweiten Teil zwei Lasereinrichtungen vorgesehen.

Des Weiteren können zwei vertikal verlaufende Führungselemente vorgesehen sein, die dem Andrückelement in Bewegungsrichtung vorgeordnet und wahlweise an das Rohr anstellbar sind. Diese vertikalen Führungselemente, beispielsweise in Form von Rollen oder Walzen mit vertikalen Drehachsen, erlauben es, das Rohr in geraden Abschnitten perfekt positioniert dem Andrückelement zuzuführen. In den gekrümmten Abschnitten hingegen sind diese Führungselemente entbehrlich, weshalb bevorzugt eine Regeleinrichtung vorgesehen ist, die ein Anstellen der vertikal verlaufenden Führungselemente auslöst, sobald die Schweißeinrichtung auf einen geraden Abschnitt trifft, und die ein Wegklappen der vertikal verlaufenden Führungselemente auslöst, sobald die Schweißeinrichtung auf einen gekrümmten Abschnitt trifft.

Das Andrückelement ist bevorzugt als drehbare Rolle ausgebildet. Insbesondere hat es sich als zweckmäßig erwiesen, dass die drehbare Rolle ein Querschnittsprofil mit einer außenseitigen v-förmigen Nut mit einem zentralen runden Bereich aufweist, der beidseitig in einen geraden Bereich übergeht. Ein derartiges Querschnittsprofil erweist sich insbesondere im Hinblick auf die Verfahrensführung in gekrümmten Abschnitten als zweckmäßig, da durch das Querschnittsprofil eine Mehrpunktanlage geschaffen ist, was eine mögliche Erklärung für die hohe Güte bzw. Qualität von Schweißpunkten auch in den gekrümmten Abschnitten darstellt.

Das weitere Ziel der Erfindung wird durch ein Verfahren der eingangs genannten Art erreicht, bei dem die Schweißeinrichtung mit dem Andrückelement an bzw. auf das Rohr angestellt wird, wobei das Andrückelement in den gekrümmten Abschnitten horizontal verschiebbar gehalten wird.

Ein mit einem erfindungsgemäßen Verfahren erzielter Vorteil ist darin zu sehen, dass ein hocheffizienter Flachabsorber rasch bzw. mit hoher Produktivität herstellbar ist. Interessanterweise hat sich gezeigt, dass auch in gekrümmten Abschnitten eine hohe Güte von Schweißpunkten in kurzer Zeit erhalten werden kann, wenn das Andrückelement in den gekrümmten Abschnitten horizontal verschiebbar gehalten wird. In diesen Bereichen führt quasi das Rohr das Andrückelement, wohingegen in den geraden Abschnitten das horizontal fixierte Andrückelement das Rohr führt.

Bevorzugt ist vorgesehen, dass das Andrückelement vertikal verschiebbar am Rohr auf- bzw. angelegt wird. Dadurch kann durch eine gegebenenfalls verminderte Schwerkraft der Schweißeinrichtung bzw. eines ersten Teils und eines zweiten Teils derselben ein Ausgleich von Abweichungen eines Bleches und eines Rohres aus einer idealen horizontalen Schweißebene automatisch erfolgen.

Mit Vorteil ist vorgesehen, dass in den geraden Abschnitten das Rohr mit vertikal verlaufenden Führungselementen geführt wird. Diese Führungselemente klappen bei Erreichen eines gekrümmten Abschnittes vom Rohr weg und werden bei Erreichen eines geraden Abschnittes wieder an das Rohr angestellt.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 ein Blech mit einem mäanderförmigen Rohr;
Fig. 2 eine Schweißeinrichtung;
Fig. 3 einen Teil eines Andrückelementes im Querschnitt;
Fig. 4 eine schematische Darstellung eines Verfahrensverlaufs.

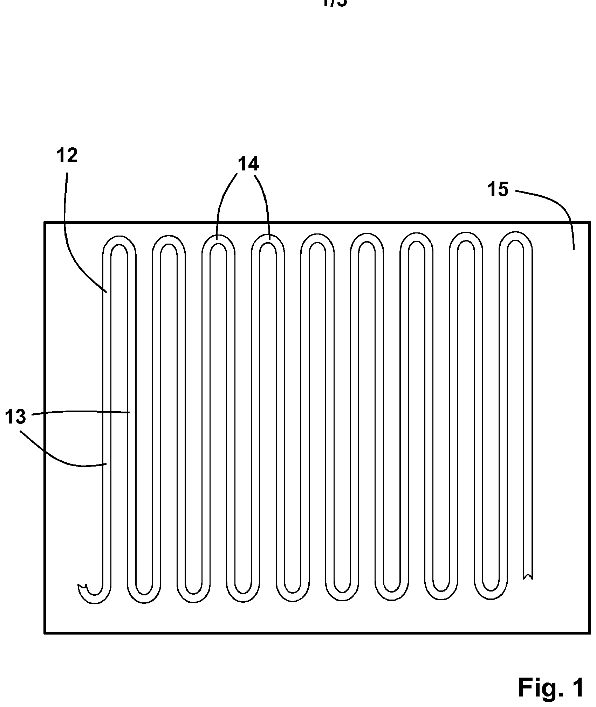

In Fig. 1 ist ein mäanderförmiges Rohr 12 dargestellt, das auf einem Blech 15 lose bzw. nur in einzelnen Bereichen mittels einer oder mehrerer Komponenten gehalten wird. Das mäanderförmige Rohr 12 weist gerade Abschnitte 13 und gekrümmte Abschnitte 14 auf, die ineinander übergehen. Das Rohr 12 ist in Fig. 1 lediglich teilweise dargestellt. Neben den ersichtlichen Abschnitten weist das Rohr 12 ferner einen nicht dargestellten Einlass sowie einen Auslass auf, die jeweils im Bereich einer Seite des Bleches 15 angeordnet sind. Das Rohr 12 befindet sich auf einer Rückseite des Bleches 15. Eine Vorderseite des Bleches 15 ist mit einem geeigneten Absorptionsmittel beschichtet, sodass die Vorderseite des Bleches 15 bei Sonneneinstrahlung dieselbe bestmöglich absorbiert und damit das beispielsweise aus Aluminium oder einem anderen metallischen Werkstoff bestehende Blech 15 erwärmt. Damit die Wärme vom Blech 15 auf das beispielsweise aus Aluminium, Kupfer, einer Legierung dieser Metalle, Stahl oder einem anderen Metall bestehende Rohr 12 und damit auf ein im Rohr 12 geführtes Wärmeträgermedium übertragen wird, muss das Rohr 12 mit dem Blech 15 in einem möglichst innigen Kontakt stehen. Hierfür wird das Rohr 12 mit dem Blech 15 an möglichst vielen Punkten, gegebenenfalls auch entlang einer oder mehrerer Linien, verschweißt.

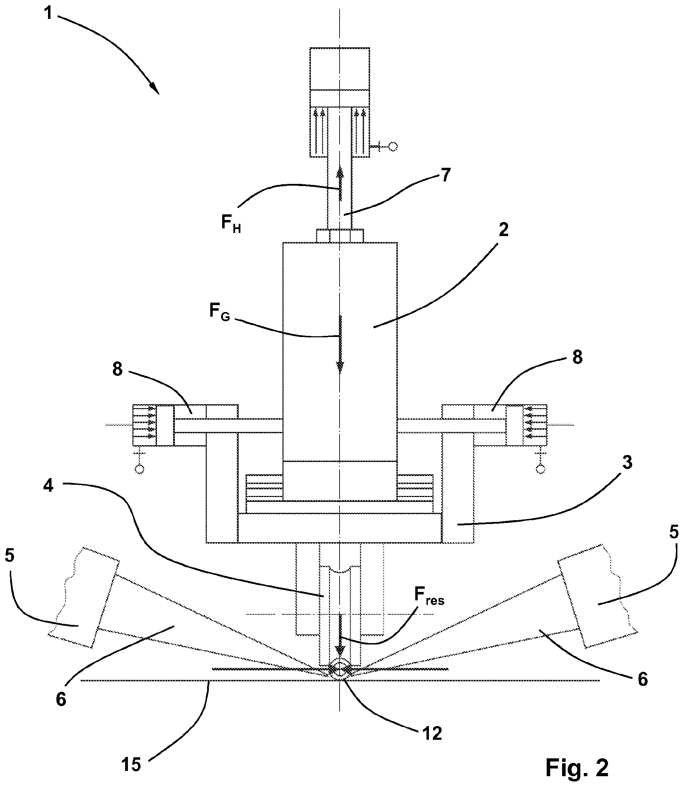

In Fig. 2 ist eine erfindungsgemäße Schweißeinrichtung 1 dargestellt, mit der das Rohr 12 am Blech 15 gemäß Fig. 1 angeschweißt werden kann. Die Schweißeinrichtung 1 umfasst einen ersten Teil 2 sowie einen zweiten Teil 3. Der erste Teil 2 ist kopfseitig an einem nicht dargestellten weiteren, computergesteuert verfahrbaren Teil der Schweißeinrichtung 1 vertikal frei verschiebbar gelagert und trägt den zweiten Teil 3. Damit der erste Teil 2 bei freier vertikaler Verschiebbarkeit nicht mit dem gesamten Eigengewicht von mehreren hundert Kilogramm auf das Rohr 12 drückt, ist ein Haltemittel 7 in Form einer Kolben-Zylinder-Einheit vorgesehen. Die Kolben-Zylinder-Einheit ist mit Druck beaufschlagbar, sodass der Kraft F_{G} des ersten Teils 2 und des zweiten Teils 3 eine Gegen- bzw. Haltekraft F_{H} entgegengesetzt werden kann. Somit ergibt sich für ein Andrückelement 4, das am zweiten Teil 3 angeordnet bzw. an Fortsätzen desselben gelagert ist, eine resultierende Kraft Fᵣₑₛ. Diese resultierende Kraft Fᵣₑₛ ist die Schwerkraft abzüglich der Gegen- bzw. Haltekraft. Die resultierende Kraft Fᵣₑₛ kann durch entsprechende Beaufschlagung der Kolben-Zylinder-Einheit mit einem Druckmedium, beispielsweise Druckluft, in geeigneter Weise, z. B. mit einem Proportionalregelventil gesteuert, eingestellt werden. Da die Schwerkraft F_{G} größer ist als die Gegen- bzw. Haltekraft F_{H}, fährt der erste Teil 2, der vertikal frei verschiebbar gelagert ist, samt dem zweiten Teil 3 bei Einbuchtung des Bleches 15 automatisch nach bzw. wird aufgrund der freien vertikalen Lagerung auch bei erhabenen Stellen nach oben gedrückt, ohne dass eine Kraftbeaufschlagung auf das Rohr 12 verloren gehen würde. Somit ist durch die vertikale Verschiebbarkeit bzw. quasi federnde Lagerung des ersten Teils 2 samt des zweiten Teils 3 sichergestellt, dass das Rohr 12 während eines Schweißprozesses ständig am Blech 15 anliegt, auch wenn dieses beispielsweise gewellt ist. Lasereinrichtungen 5, die Laserlichtstrahlen 6 generieren, sind am zweiten Teil 3 beidseitig des Rohres 12 angeordnet und verfahren ebenfalls in vertikaler Richtung, sodass stets eine optimale Position der Lasereinrichtungen 5 bzw. der am Rohr 12 und Blech 15 unterhalb des Andrückelementes 4 auftreffenden Laserlichtstrahlen 6 gegeben ist.

Der zweite Teil 3 ist gegenüber dem ersten Teil 2 bei Bedarf bzw. wahlweise in eine horizontal frei verschiebbare Stellung bringbar. Hierfür sind am zweiten Teil 3 zwei seitliche Stellelemente 8 vorgesehen, die wiederum als Kolben-Zylinder-Einheiten ausgebildet sein können und zusammenwirken. Diese Stellelemente 8 erlauben es einerseits, den zweiten Teil 3 in Bezug auf eine horizontale Verschiebbarkeit gegenüber dem ersten Teil 2 in einer fixierten Position zu behalten, wenn die Stellelemente 8 bzw. die Kolben-Zylinder-Einheiten geeignet jeweils mit hohem Druck beaufschlagt werden. Andererseits ist es auch möglich, dass bei entsprechender Aufhebung oder Minderung des Druckes die zusammenwirkenden Stellelemente 8 den zweiten Teil 3 in Bezug auf eine horizontale Verschiebbarkeit gegenüber dem ersten Teil 2 vollständig freigeben oder gegen einen deutlich niedrigeren Druck nach links oder rechts auslenken lassen, wobei dann bei Auslenkung der Druck in einem Stellelement 8 erhöht und im anderen Stellelement 8 reduziert wird, sodass es zu einer automatischen Rückstellung des zweiten Teils 3 in eine Normalposition kommt, wenn ein Verlauf des Rohres 12 dies zulässt.

Das Andrückelement 4 ist in der Regel als drehbare Rolle ausgebildet, die am zweiten Teil 3 drehbar gelagert ist, und zwar an Fortsätzen desselben. Die Rolle weist, wie aus Fig. 2 ersichtlich ist, außen- bzw. umfangsseitig ein v-förmiges Querschnittsprofil auf. Das Querschnittsprofil ist zentral mit einem runden Bereich 10 ausgebildet, der beidseitig in gerade Bereiche 11 übergeht.

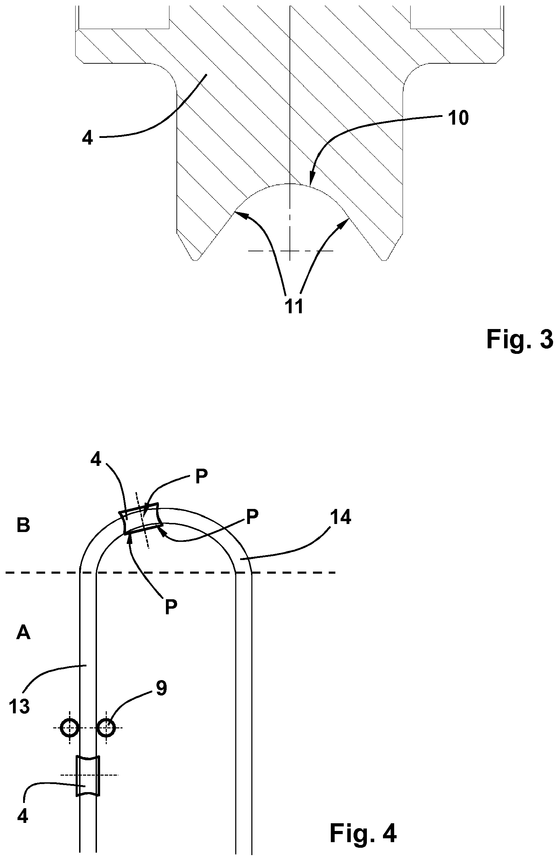

In Fig. 4 ist die Arbeitsweise einer Schweißeinrichtung 1 bzw. eines erfindungsgemäßen Verfahrens beispielhaft für einen Bereich A und einem Bereich B dargestellt, wobei im Bereich A gerade Abschnitte 13 und im Bereich B gekrümmte Abschnitte 14 eines Rohres 12 vorliegen. Im Bereich A wird die Schweißeinrichtung 1 mit Anstellung der Rolle bzw. des Andrückelementes 4 sowie vorgeschalteter Führung seitlicher Führungselemente 9, nämlich frei drehbare, an das Rohr 12 angestellte Rollen, verfahren, wobei in konstanten Abständen von wenigen Millimetern, bevorzugt weniger als drei Millimeter, mit den Lasereinrichtungen 5 beidseits des Rohres 12 Schweißpunkte angebracht werden. Der erste Teil 2 der Schweißeinrichtung 1 ist bei Verfahren der Schweißeinrichtung 1 im Bereich A vertikal frei verschiebbar gelagert, wie vorstehend beschrieben. Der zweite Teil 3 wird relativ zum ersten Teil 2 im Bereich A fixiert gehalten. Am Übergang des Bereiches A zum Bereich B werden die Führungselemente 9 weggeklappt und gleichzeitig oder lediglich geringfügig zeitlich vor- oder nachversetzt der zweite Teil 3 gegenüber dem ersten Teil 2 in eine horizontal frei verschiebbare Stellung geschaltet, wobei die Verschiebbarkeit auch gegen eine vorbestimmte Kraft gegeben sein kann. Das Andrückelement 4 bzw. die Rolle ist dadurch im Bereich B gegenüber dem ersten Teil 2 horizontal frei verschiebbar und kann einer Biegung des Rohres 12 folgen. Durch die in Fig. 3 dargestellte Form der Rolle bzw. des Andrückelementes 4 unter gleichzeitigen vertikal wirkenden Kräften des ersten Teils 2 samt dem damit verbundenen zweiten Teil 3 wird in diesem Bereich B jeweils an Punkten P eine Mehrpunktanlage der Rolle auf dem Rohr 12 bewirkt. Dies erweist sich als besonders günstig in Bezug auf eine exakte Anbringung von Schweißpunkten. Es ist daher möglich, auch im Bereich B bzw. in den gekrümmten Abschnitten 13 die Schweißeinrichtung mit relativ hoher Geschwindigkeit zu fahren, ohne dass Qualitätseinbußen im Vergleich mit einer Qualität von Schweißpunkten im Bereich der geraden Abschnitte hinzunehmen wären.

Das erfindungsgemäße Verfahren bietet insbesondere den Vorteil, dass die Schweißeinrichtung 1 programmiert mit hoher Geschwindigkeit verfahrbar und einsetzbar ist, wobei in den geraden Abschnitten 13 eines mäanderförmigen Rohres 12 die Schweißeinrichtung 1 das Rohr 12 einfängt und gegebenenfalls seitlich biegt, in den gekrümmten Abschnitten 14 hingegen, wo in der Regel nicht perfekte bzw. immer gleiche Biegungen gegeben sind, der zweite Teil 3 der Schweißeinrichtung 1 dem Rohr 12 folgt.

## Patentansprüche

1. Schweißeinrichtung (1) zum Anschweißen eines gerade Abschnitte (13) und gekrümmte Abschnitte (14) aufweisenden Rohres (12) an einem horizontal angeordneten Blech (15), insbesondere eines mäanderförmig verlaufenden Rohres (12), wobei das Rohr (12) auf dem Blech (15) angeordnet ist, umfassend zumindest eine Lasereinrichtung (5), mit der ein Laserlichtstrahl (6) in einen Bereich einer Berührungslinie des Rohres (12) und des Bleches (15) führbar ist, um das Rohr (12) zumindest punktweise am Blech (15) anzuschweißen, wobei die Schweißeinrichtung (1) ein Andrückelement (4) umfasst, um das Rohr (12) bei Bewegung der Schweißeinrichtung (1) an das Blech (15) anzudrücken und zu führen, **dadurch gekennzeichnet, dass** ein erster, entlang des Rohres (12) verfahrbarer Teil (2) und ein damit verbundener zweiter Teil (3) vorgesehen sind, wobei das Andrückelement (4) am zweiten Teil (3) gelagert ist, und zumindest ein Stellelement (8) vorgesehen ist, mit dem der zweite Teil (3) relativ zum ersten Teil (2) während des Schweißprozesses alternativ sowohl in eine fixierte als auch in eine Stellung mit freier horizontaler Verschiebbarkeit wahlweise bringbar ist.

2. Schweißeinrichtung (1) nach Anspruch 1, **dadurch gekennzeichnet, dass** der erste Teil (2) vertikal verschiebbar gelagert ist.

3. Schweißeinrichtung (1) nach Anspruch 2, **dadurch gekennzeichnet, dass** der zweite Teil (3) am ersten Teil (2) befestigt ist und ein Haltemittel (7) vorgesehen ist, das auf den ersten Teil (2) eine gegen eine Schwerkraft des ersten Teils (2) und zweiten Teils (3) wirkende Kraft ausübt, wenn dieser frei vertikal verschiebbar ist.

4. Schweißeinrichtung (1) nach Anspruch 3, **dadurch gekennzeichnet, dass** das Haltemittel (7) eine Kolben-Zylinder-Einheit ist.

5. Schweißeinrichtung (1) nach einem der Ansprüche 1 bis 4, **dadurch gekennzeichnet, dass** zwei Stellelemente (8) vorgesehen sind.

6. Schweißeinrichtung (1) nach Anspruch 5, **dadurch gekennzeichnet, dass** die Stellelemente (8) Kolben-Zylinder-Einheiten sind.

7. Schweißeinrichtung (1) nach einem der Ansprüche 1 bis 6, **dadurch gekennzeichnet, dass** am zweiten Teil (3) zwei Lasereinrichtungen (5) vorgesehen sind.

8. Schweißeinrichtung (1) nach einem der Ansprüche 1 bis 7, **dadurch gekennzeichnet, dass** zwei vertikal verlaufende Führungselemente (9) vorgesehen sind, die dem Andrückelement (4) in Bewegungsrichtung vorgeordnet und wahlweise an das Rohr (12) anstellbar sind.

9. Schweißeinrichtung (1) nach Anspruch 8, **dadurch gekennzeichnet, dass** eine Regeleinrichtung vorgesehen ist, die ein Anstellen der vertikal verlaufenden Führungselemente (9) auslöst, sobald die Schweißeinrichtung (1) auf einen geraden Abschnitt (13) trifft, und die ein Wegklappen der vertikal verlaufenden Führungselemente (9) auslöst, sobald die Schweißeinrichtung (1) auf einen gekrümmten Abschnitt trifft.

10. Schweißeinrichtung (1) nach einem der Ansprüche 1 bis 9, **dadurch gekennzeichnet, dass** das Andrückelement (4) als drehbare Rolle ausgebildet ist.

11. Schweißeinrichtung (1) nach Anspruch 10, **dadurch gekennzeichnet, dass** die drehbare Rolle ein Querschnittsprofil mit einer außenseitigen v-förmigen Nut mit einem zentralen runden Bereich (10) aufweist, der beidseitig in einen geraden Bereich (11) übergeht.

12. Verfahren zum Anschweißen eines gerade Abschnitte (13) und gekrümmte Abschnitte (14) aufweisenden Rohres (12), insbesondere eines mäanderförmig verlaufenden Rohres (12), an einem horizontal angeordneten Blech (15), wobei das Rohr (12) auf dem Blech (15) angeordnet und mit einer Schweißeinrichtung (1) das Rohr (12) abgefahren und zumindest punktweise durch Erwärmen angeschweißt wird, wobei ein Andrückelement (4) der Schweißeinrichtung (1) auf dem Rohr (12) auf- und/oder anliegt, **dadurch gekennzeichnet, dass** die Schweißeinrichtung (1) mit dem Andrückelement (4) an bzw. auf das Rohr (12) angestellt wird, wobei das Andrückelement (4) in den gekrümmten Abschnitten (14) horizontal verschiebbar gehalten wird.

13. Verfahren nach Anspruch 12, **dadurch gekennzeichnet, dass** das Andrückelement (4) in den geraden Abschnitten (13) in horizontaler Richtung fixiert gehalten wird.

14. Verfahren nach Anspruch 12 oder 13, **dadurch gekennzeichnet, dass** das Andrückelement (4) vertikal verschiebbar am Rohr (12) auf- bzw. angelegt wird.

15. Verfahren nach einem der Ansprüche 12 bis 14, **dadurch gekennzeichnet, dass** in den geraden Abschnitten (13) das Rohr (12) mit vertikal verlaufenden Führungselementen (9) geführt wird.

16. Verfahren nach Anspruch 15, **dadurch gekennzeichnet, dass** die Führungselemente (9) bei Erreichen eines gekrümmten Abschnittes (14) vom Rohr (12) weggeklappt und bei Erreichen eines geraden Abschnittes (13) an das Rohr (12) angestellt werden.

## Claims

1. A welding apparatus (1) for welding a pipe (12) having straight sections (13) and curved sections (14), particularly a pipe (12) extending in a meander-shaped manner, to a horizontally arranged metal sheet (15), wherein the pipe (12) is arranged on the metal sheet (15), comprising at least one laser device (5), by means of which a laser beam (6) can be guided into a region of a contact line between the pipe (12) and the metal sheet (15) in order to at least spot-weld the pipe (12) to the metal sheet (15), wherein the welding apparatus (1) comprises a pressing element (4) in order to guide and press the pipe (12) against the metal sheet (15) while the welding apparatus (1) is in motion, **characterized in that** a first part (2), which can be displaced along the pipe (12), and a second part (3) connected thereto are provided, wherein the pressing element (4) is mounted on the second part (3), and **in that** at least one actuating element (8) is provided, by means of which the second part (3) can be selectively moved relative to the first part (2) into a fixed position, as well as alternatively into a position with free horizontal displaceability, during the welding process.

2. The welding apparatus (1) according to claim 1, **characterized in that** the first part (2) is mounted in a vertically displaceable manner.

3. The welding apparatus (1) according to claim 2, **characterized in that** the second part (3) is fastened on the first part (2) and a holding means (7) is provided, wherein said holding means exerts a force acting against a gravitational force of the first part (2) and the second part (3) upon the first part (2) when it can be freely displaced vertically.

4. The welding apparatus (1) according to claim 3, **characterized in that** the holding means (7) is a piston-cylinder unit.

5. The welding apparatus (1) according to one of claims 1 to 4, **characterized in that** two actuating elements (8) are provided.

6. The welding apparatus (1) according to claim 5, **characterized in that** the actuating elements (8) are piston-cylinder units.

7. The welding apparatus (1) according to one of claims 1 to 6, **characterized in that** two laser devices (5) are provided on the second part (3).

8. The welding apparatus (1) according to one of claims 1 to 7, **characterized in that** two vertically extending guide elements (9) are provided, wherein said guide elements are arranged upstream of the pressing element (4) referred to the moving direction and can be selectively adjusted against the pipe (12).

9. The welding apparatus (1) according to claim 8, **characterized in that** a control device is provided, wherein said control device triggers an adjustment of the vertically extending guide elements (9) against the pipe as soon as the welding apparatus (1) encounters a straight section (13) and an adjustment of the vertically extending guide elements (9) away from the pipe as soon as the welding apparatus (1) encounters a curved section.

10. The welding apparatus (1) according to one of claims 1 to 9, **characterized in that** the pressing element (4) is realized in the form of a rotatable roller.

11. The welding apparatus (1) according to claim 10, **characterized in that** the rotatable roller has a cross-sectional profile with an outer v-shaped groove having a central round region (10), which transforms into a straight region (11) on both sides.

12. A method for welding a pipe (12) having straight sections (13) and curved sections (14), particularly a pipe (12) extending in a meander-shaped manner, to a horizontally arranged metal sheet (15), wherein the pipe (12) is arranged on the metal sheet (15), wherein a welding apparatus (1) moves along the pipe (12) and at least spot-welds the pipe to the metal sheet by means of heating, and wherein a pressing element (4) of the welding apparatus (1) rests on and/or against the pipe (12), **characterized in that** the welding apparatus (1) is respectively adjusted against or on the pipe (12) with the pressing element (4), wherein the pressing element (4) is held in a horizontally displaceable manner in the curved sections (14).

13. The method according to claim 12, **characterized in that** the pressing element (4) is held in a horizontally fixed manner in the straight sections (13) .

14. The method according to claim 12 or 13, **characterized in that** the pressing element (4) is respectively placed on or against the pipe (12) in a vertically displaceable manner.

15. The method according to one of claims 12 to 14, **characterized in that** the pipe (12) is guided with vertically extending guide elements (9) in the straight sections (13).

16. The method according to claim 15, **characterized in that** the guide elements (9) are adjusted away from the pipe (12) upon reaching a curved section (14) and adjusted against the pipe (12) upon reaching a straight section (13).

## Revendications

1. Dispositif de soudage (1), destiné à souder un tube (12) comportant des tronçons (13) droits et des tronçons (14) curvilignes sur une tôle (15), placée à l'horizontale d'un tube (12) s'écoulant en forme de méandre, le tube (12) étant placé sur la tôle (15), comprenant au moins un système laser (5), à l'aide duquel un faisceau de lumière laser (6) est susceptible d'être guidé dans une zone d'une ligne de contact du tube (12) et de la tôle (15), pour souder au moins ponctuellement le tube (12) sur la tôle (15), le dispositif de soudage (1) comprenant un élément presseur (4), destiné à presser le tube (12) sur la tôle (15) lors du déplacement du dispositif de soudage (1) et à la guider, **caractérisé en ce qu'**une première partie (2) déplaçable le long du tube (12) et une deuxième partie (3) reliée avec celle-ci sont prévues, l'élément presseur (4) étant logé sur la deuxième partie (3), et au moins un élément de réglage (8) étant prévu, à l'aide duquel la deuxième partie (3) est susceptible d'être amenée sélectivement par rapport à la première partie (2) pendant le processus de soudage, en variante, aussi bien dans une position fixée que dans une position à déplacement horizontal libre.

2. Dispositif de soudage (1) selon la revendication 1, **caractérisé en ce que** la première partie (2) est logée en étant déplaçable à la verticale.

3. Dispositif de soudage (1) selon la revendication 2, **caractérisé en ce que** la deuxième partie (3) est fixée sur la première partie (2) et **en ce qu'**il est prévu un moyen de retenue (7) qui exerce sur la première partie (2) une force agissant à l'encontre d'une force de gravité de la première partie (2) et de la deuxième partie (3) lorsque celle-ci est librement déplaçable à la verticale.

4. Dispositif de soudage (1) selon la revendication 3, **caractérisé en ce que** le moyen de retenue (7) est une unité piston-cylindre.

5. Dispositif de soudage (1) selon l'une quelconque des revendications 1 à 4, **caractérisé en ce que** deux éléments de réglage (8) sont prévus.

6. Dispositif de soudage (1) selon la revendication 5, **caractérisé en ce que** les éléments de réglage (8) sont des unités piston-cylindre.

7. Dispositif de soudage (1) selon l'une quelconque des revendications 1 à 6, caractérisé en ce sur la deuxième partie (3) sont prévus deux systèmes laser (5) .

8. Dispositif de soudage (1) selon l'une quelconque des revendications 1 à 7, **caractérisé en ce que** deux éléments de guidage (9) s'écoulant à la verticale sont prévus, qui sont placés en amont de l'élément presseur (4) dans la direction de déplacement et qui sont sélectivement susceptibles d'être mis en prise avec le tube (12).

9. Dispositif de soudage (1) selon la revendication 8, **caractérisé en ce qu'**il est prévu un système de réglage, qui déclenche une mise en prise des éléments de guidage (9) s'écoulant à la verticale dès que le dispositif de soudage (1) est incident sur un tronçon (13) droit, et qui déclenche un basculement en éloignement des éléments de guidage (9) s'écoulant à la verticale dès que le dispositif de soudage (1) est incident sur un tronçon curviligne.

10. Dispositif de soudage (1) selon l'une quelconque des revendications 1 à 9, **caractérisé en ce que** l'élément presseur (4) est conçu sous la forme d'un galet rotatif.

11. Dispositif de soudage (1) selon la revendication 10, **caractérisé en ce que** le galet rotatif comporte un profil de section transversale avec une rainure externe en forme de V pourvue d'une zone (10) centrale qui passe de part et d'autre dans une zone (11) droite.

12. Procédé, destiné à souder un tube (12) comportant des tronçons (13) droits et des tronçons (14) curvilignes, notamment un tube (12) s'écoulant en forme de méandre sur une tôle (15), placée à l'horizontale, le tube (12) étant placé sur la tôle et à l'aide d'un dispositif de soudage (1), le tube (12) étant parcouru et soudé au moins ponctuellement par échauffement, un élément presseur (4) du dispositif de soudage (1) s'appuyant sur le tube (12) et/ou étant adjacent à celui-ci, **caractérisé en ce qu'**on met en prise le dispositif de soudage (1) avec l'élément presseur (4) avec ou sur le tube (12), dans les tronçons (14) curvilignes, l'élément presseur (4) étant maintenu en étant déplaçable à l'horizontale.

13. Procédé selon la revendication 12, **caractérisé en ce que** dans les tronçons (13) droits, l'élément presseur (4) est maintenu en étant fixé dans la direction horizontale.

14. Procédé selon la revendication 12 ou 13, **caractérisé en ce que** qu'on pose l'élément presseur (4) de manière déplaçable à la verticale sur le dessus ou sur le tube (12) .

15. Procédé selon l'une quelconque des revendications 12 à 14, **caractérisé en ce que** dans les tronçons (13) droits, on guide le tube (12) avec des éléments de guidage (9) s'écoulant à la verticale.

16. Procédé selon la revendication 15, **caractérisé en ce qu'**à l'atteinte d'un tronçon (14) curviligne, on bascule les éléments de guidage (9) en éloignement du tube (12) et à l'atteinte d'un tronçon (13) droit, on les met en prise avec le tube (12).
